# FASCICULE DE BREVET EUROPEEN

(11) **EP 3 041 662 B1**
(45) Date de publication et mention de la délivrance du brevet: **25.07.2018**
(21) Numéro de dépôt: 14781925.4
(22) Date de dépôt: 28.08.2014
(51) Int. Cl.: B29C 53/08

(54) **DISPOSITIF DE CINTRAGE DE TUBES PAR FORMAGE THERMIQUE**
VORRICHTUNG ZUM BIEGEN VON ROHREN DURCH THERMOFORMEN
DEVICE FOR BENDING TUBES BY THERMOFORMING

(30) Priorité: 04.09.2013 FR 1302050
(43) Date de publication de la demande: 13.07.2016
(73) Titulaire: ADMC Holding, LLC, Lebanon OH 45036 (US)
(72) Inventeur: JAUBERT, Philippe, F-32430 Cologne (FR)
(74) Mandataire: Glück Kritzenberger Patentanwälte PartGmbB
(86) Numéro de dépôt international: PCT/FR2014/000191
(87) Numéro de publication internationale: WO 2015/033028

(56) Documents cités:
- EP-A1- 1 108 523
- US-B1- 6 287 508

## Description

L'invention concerne un dispositif de cintrage pour la réalisation par formage thermique de tubes cintrés en matière plastique.

Les tubes, dits tubes plastiques, en matières plastiques, du type notamment polymères thermoplastiques, tel que le polyamide, utilisés notamment dans le domaine automobile et le domaine aéronautique, et présentant des tronçons cintrés, sont actuellement réalisés par formage thermique de tubes disposés dans des gabarits de formage formant un conduit de guidage ouvert présentant le profil longitudinal des tubes cintrés.

Deux techniques de formage thermique sont principalement mises en oeuvre à l'heure actuelle : une première technique consistant à utiliser des fours de chauffage dans lesquels sont introduits les gabarits de formage, et une seconde technique consistant à faire circuler, dans les tubes positionnés dans les gabarits de formage, un fluide de chauffage porté à une température adaptée pour obtenir une transition fragile-ductile des dits tubes (voir par exemple US6287508). Un des inconvénients de cette seconde technique réside dans le fait que sa mise en oeuvre requiert de nombreuses opérations successives qui conduisent à des temps de cycles de formage importants et nécessitent une main d'oeuvre conséquente, qui se traduisent par des coûts de production élevés.

La présente invention vise à pallier les inconvénients de cette seconde technique de formage thermique et a pour objectif principal de fournir un dispositif de cintrage conçu pour automatiser la majorité des opérations de cintrage et pour élever de façon notable la cadence de production.

Un autre objectif de l'invention est de fournir un dispositif de cintrage permettant un montage automatisé de composants sur les extrémités des tubes cintrés.

A cet effet, l'invention vise un dispositif de cintrage pour la réalisation par formage thermique de tubes cintrés en matière plastique, comportant des gabarits de formage formant un conduit de guidage ouvert présentant le profil longitudinal des tubes cintrés, et, selon l'invention, ce dispositif de cintrage comprend :
- des moyens centralisés d'alimentation en un fluide de chauffage des tubes, porté à une température adaptée pour obtenir, par circulation du dit fluide à l'intérieur des tubes, une transition fragile-ductile des dits tubes,
- des moyens centralisés d'alimentation en au moins un fluide de refroidissement des tubes par circulation de chaque fluide à l'intérieur des dits tubes,
- une unité de formage comportant au moins trois postes de travail destinés à être équipés de gabarits de formage identiques, chacun des dits postes de travail comprenant :
   ▪ un plateau support doté de moyens de fixation et d'indexation de la position du gabarit de formage,
   ▪ des moyens de circulation de fluide adaptés pour former un circuit de circulation de fluide intégrant le tube positionné sur le gabarit de formage, et comportant :
      - un organe de distribution adapté pour être raccordé aux moyens centralisés d'alimentation en fluides et pour permettre de sélectionner le fluide d'alimentation du circuit de circulation,
      - un conduit d'alimentation raccordé à l'organe de distribution et doté d'une extrémité libre équipée d'un raccord de connexion étanche avec le tube,
      - un conduit d'évacuation doté d'une extrémité libre équipée d'un raccord de connexion étanche avec le tube,
      - et, pour, chacun des raccords, un support adapté pour être fixé sur le plateau dans le prolongement du gabarit de formage, sur lequel le dit raccord est monté par l'intermédiaire d'un organe de déplacement de ce raccord entre une position de connexion étanche avec le tube et une position déconnectée du dit tube,
- un système robotisé polyarticulé :
   ▪ comportant une main de préhension d'un tube à cintrer dotée d'un organe presseur présentant une surface d'appui apte à exercer sur le tube une force d'insertion de ce dernier dans le conduit de guidage du gabarit de formage,
   ▪ associé à une unité programmable de pilotage programmée pour commander un déplacement de la main du dit système robotisé adapté pour que l'organe presseur se déplace le long d'une trajectoire correspondant au profil longitudinal du conduit de guidage du gabarit de formage,
- des moyens de déplacement relatif du système robotisé et de l'unité de formage, adaptés pour que le dit système robotisé soit positionné successivement en regard de chacun des postes de travail,
- et une unité centrale de gestion de l'unité de formage et du système robotisé programmée pour commander, après une étape initiale manuelle de fixation des gabarits de formage et des supports des raccords sur les postes de travail, et d'indexation de la position des gabarits de formage, des cycles de formage comportant, pour chaque poste de travail, les étapes suivantes :
   - insertion du tube à cintrer maintenu dans la main du système robotisé dans le conduit de guidage du gabarit de formage équipant le dit poste de travail,
   - connexion des raccords avec le tube par actionnement des organes de déplacement des dits raccords, et déplacement relatif de l'unité de formage et du système robotisé destiné à positionner le dit système robotisé en regard d'un autre poste de travail,
   - mise en circulation du fluide destiné à l'obtention de la transition fragile-ductile,
   - mise en circulation de chaque fluide de refroidissement,
   - et déconnexion des raccords en vue du déchargement du tube cintré.

Pour chaque modèle de tube cintré, et donc chaque modèle de gabarits de formage, un tel dispositif de cintrage est donc conçu, après une étape initiale manuelle de fixation des gabarits de formage et des supports des raccords sur les postes de travail, et d'indexation de la position des gabarits de formage, pour réaliser des cycles de formage entièrement automatisés au cours de chacun desquels, pour chaque poste de travail, un tube est successivement chargé sur le gabarit de formage positionné sur le dit poste de travail, puis chauffé, refroidi, et enfin amené en position de déchargement.

Il est à noter, en outre, que les moyens de fixation des gabarits de formage peuvent être de tout type classique connu en soi, l'indexation de la position de ces gabarits de formage pouvant être de type matérielle et/ou logicielle.

Un tel dispositif de cintrage permet, en outre, de produire les tubes cintrés avec une cadence élevée fonction du temps requis pour l'opération la plus longue (chargement, chauffage, refroidissement).

Selon un mode de réalisation avantageux de l'invention, les moyens centralisés d'alimentation en un fluide de chauffage comprennent une source de production de vapeur d'eau.

Les moyens centralisés d'alimentation en au moins un fluide de refroidissement comprennent, quant à eux, avantageusement selon l'invention, une source de production d'eau froide, et une source de production d'air de séchage des tubes après refroidissement de ces derniers.

Le dispositif de cintrage comprend, par ailleurs, avantageusement selon l'invention, des moyens automatisés d'alimentation en tube plastique adaptés pour alimenter la main du système robotisé en tronçons de tube plastique prédécoupés à une longueur prédéterminée.

Ces moyens d'alimentation en tube plastique comprennent, en outre, avantageusement selon l'invention :
- une bobine de conditionnement du dit tube plastique,
- des moyens de dévidage de la bobine,
- un capteur de mesure de la longueur de tube dévidée,
- et des moyens de découpe de tronçons de tube de longueurs présélectionnées.

Selon un autre mode de réalisation avantageux de l'invention, l'organe de déplacement de chaque raccord consiste en un vérin doté d'une tige sur laquelle est solidarisé le dit raccord, et d'un corps fixé sur le support.

Par ailleurs, afin de garantir une parfaite reproductibilité des gabarits.de formage et par conséquent une parfaite homogénéité des tubes cintré réalisés, chaque gabarit de formage est avantageusement doté, selon l'invention, de moyens de guidage constitués d'organes de guidage ponctuel comportant une gorge de section conjuguée de celle du tube, formant un conduit de guidage matérialisé par une succession d'appuis ponctuels du dit tube.

Chacun de ces organes de guidage comporte, en outre, avantageusement selon l'invention, une gorge de forme rétentive présentant une ouverture d'introduction et de retrait du tube dotée de bords longitudinaux chanfreinés destinés à faciliter l'introduction du tube dans la gorge de forme rétentive.

Par ailleurs, le système robotisé du dispositif de cintrage selon l'invention présente avantageusement une main articulée de façon à pouvoir être programmé pour que la force d'insertion du tube dans la gorge de chaque organe de guidage s'exerce selon un axe parallèle au plan de symétrie de la dite gorge, facilitant ainsi l'introduction des tubes dans les gorges.

L'organe presseur de ce système robotisé consiste, quant à lui, avantageusement selon l'invention, en un galet doté d'une gorge périphérique de section conjuguée de celle du tube.

De plus, cet organe presseur est avantageusement associé à des moyens élastiques adaptés pour autoriser un débattement du dit organe presseur selon une direction parallèle à l'axe de la force d'insertion exercée par ce dernier.

Par ailleurs, afin d'éviter un éventuel glissement longitudinal du tube à l'intérieur du conduit de guidage, le dispositif de cintrage comprend avantageusement selon l'invention un organe rétractable de blocage de l'extrémité du tube dans le conduit de guidage du gabarit de formage, destiné à être actionné lors de l'insertion d'un tube dans un gabarit de formage.

Selon un autre mode de réalisation avantageux de l'invention, la main de préhension du système robotisé comporte des rouleaux motorisés disposés et entraînés en rotation de façon que le tube s'engage entre les dits rouleaux et soit entraîné vers l'organe presseur selon une direction de défilement opposée à la direction de déplacement de la dite main de préhension.

De plus, ces rouleaux motorisés sont avantageusement montées sur la main de préhension par l'intermédiaire de moyens de déplacement relatif des dits rouleaux entre une position rapprochée d'entrainement du tube et une position écartée d'échappement du dit tube.

Selon une première variante avantageuse de réalisation de l'invention, l'unité de formage comporte des postes de travail fixes, les moyens de déplacement relatif du système robotisé et de la dite unité de formage étant adaptés pour déplacer le système robotisé de façon à l'amener successivement en regard de chacun des dits postes de travail fixes.

De plus, selon cette variante de réalisation, les postes de travail sont avantageusement alignés les uns à la suite des autres, les moyens de déplacement du système robotisé étant adaptés pour déplacer ce dernier selon une trajectoire rectiligne.

Selon une seconde variante avantageuse de réalisation de l'invention, l'unité de formage comporte des moyens de déplacement des postes de travail adaptés pour amener successivement ces derniers en regard d'une position fixe sur laquelle est situé le système robotisé.

De plus, selon cette variante de réalisation, l'unité de formage comporte avantageusement une table circulaire divisée en secteurs circulaires constituant chacun un poste de travail, les moyens de déplacement des dits postes de travail consistant en des moyens d'entraînement en rotation de la dite table circulaire.

Par ailleurs, selon cette seconde variante de réalisation l'unité de formage, les moyens d'entraînement en rotation de la table circulaire et les moyens centralisés d'alimentation en fluides de refroidissement sont adaptés pour définir une position des postes de travail, dite de refroidissement, dans laquelle les deux fluides de refroidissement sont successivement délivrés dans le circuit de circulation.

Le temps cumulé de circulation des deux fluides de refroidissement s'avère, en effet, de l'ordre du temps requis pour obtenir la transition fragile-ductile, et cette disposition permet d'obtenir des temps de chauffage et de refroidissement sensiblement similaires.

Par ailleurs, selon cette seconde variante de réalisation, l'opération de déchargement peut également être automatisée, et à cet effet, selon une première solution, l'unité de formage et les moyens d'entraînement en rotation de la table circulaire sont avantageusement adaptés pour définir une position des postes de travail, dite de chargement/déchargement, et le système robotisé comporte avantageusement une seconde main de préhension des tubes cintrés en vue de leur déchargement.

En vue de l'automatisation de l'opération de déchargement, et selon une autre solution, l'unité de formage et, les moyens d'entraînement en rotation de la table circulaire sont avantageusement adaptés pour définir :
- une position des postes de travail, dite de chargement, dans laquelle le poste de travail est situé en regard du système robotisé,
- une position des postes de travail, dite de déchargement, dans laquelle le poste de travail est situé en regard d'un second système robotisé doté d'une main adaptée pour assurer la préhension et le déchargement du tube cintré.

De plus, ce second système robotisé comporte, en outre, avantageusement selon l'invention, un équipement de montage de composants sur les extrémités des tubes cintrés.

D'autres caractéristiques, buts et avantages de l'invention ressortiront de la description détaillée qui suit en référence aux dessins annexés qui en représentent à titre d'exemples non limitatifs deux modes de réalisation préférentiels. Sur ces dessins :
- la figure 1 est une vue en élévation schématique d'un premier mode de réalisation d'un dispositif de cintrage conforme à l'invention,
- la figure 2 est une vue en plan schématique de ce premier mode de réalisation,
- la figure 3 est une vue de dessus schématique d'un poste de travail de ce premier mode de réalisation de dispositif de cintrage, sur lequel est positionné un gabarit de formage,
- la figure 4 est une vue longitudinale schématique de la main du système robotisé représentée en cours d'insertion d'un tube dans un gabarit de formage,
- la figure 5 est une vue transversale de cette main lors de l'insertion d'un tube dans un gabarit de formage,
- et la figure 6 est une vue en plan schématique d'un deuxième mode de réalisation d'un dispositif de cintrage conforme à l'invention

Les dispositifs de cintrage selon l'invention représentés à titre d'exemples aux figures consistent en des dispositifs de cintrage pour la réalisation par formage thermique de tubes cintrés 1 en matières plastiques du type notamment polymères thermoplastiques, tel que le polyamide, utilisés notamment dans le domaine automobile et le domaine aéronautique.

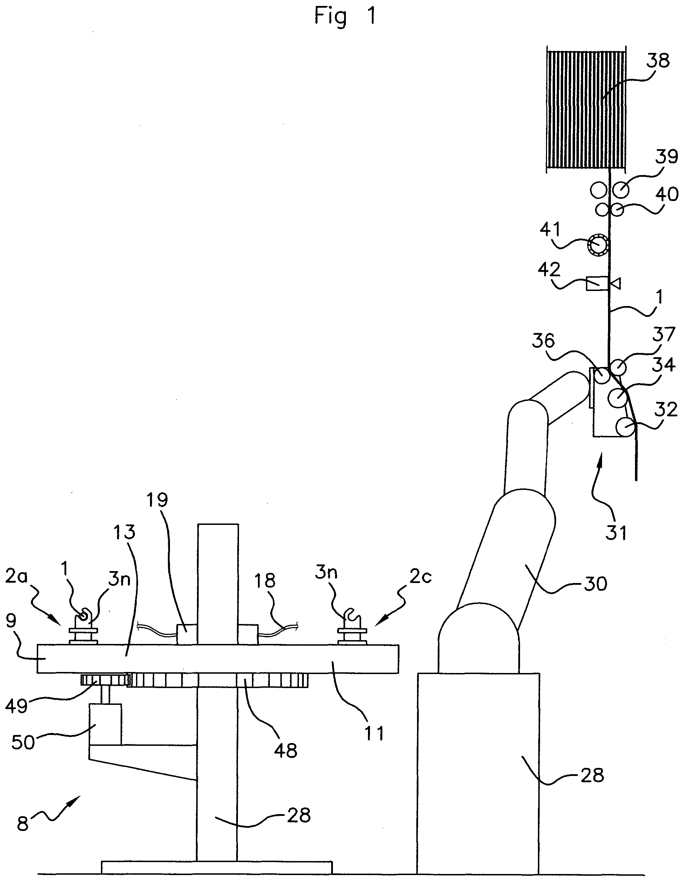

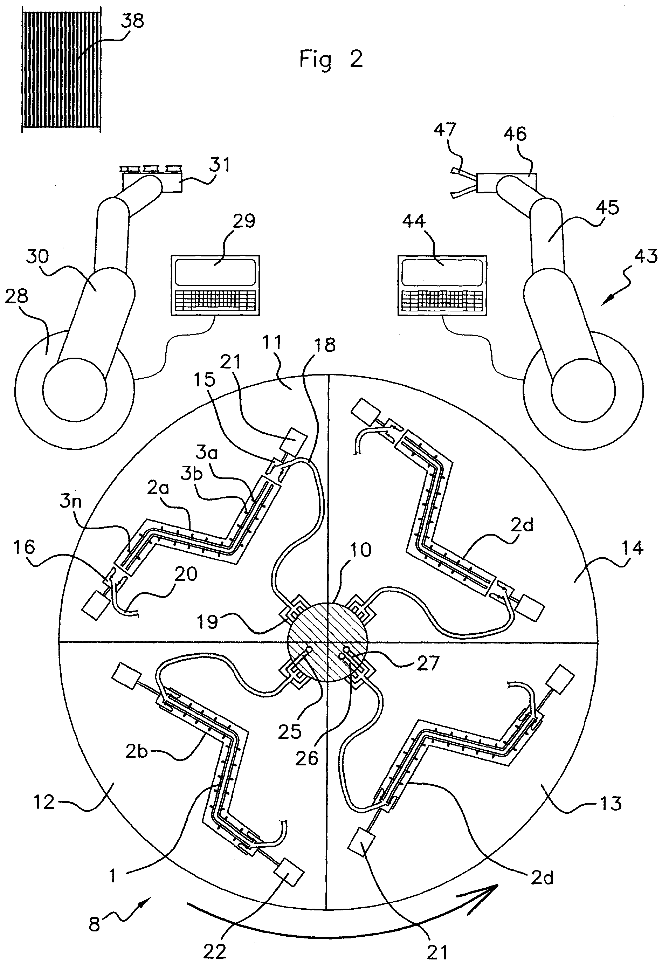

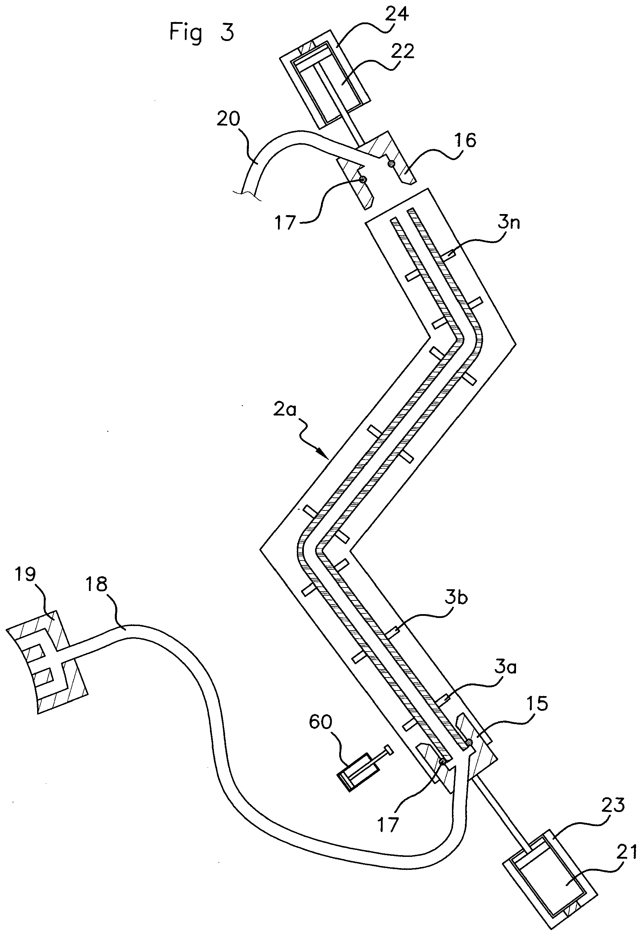

En premier lieu, le dispositif de cintrage représenté aux figures 1 à 5 comporte :
- une unité de formage 8 dotée d'un plateau support circulaire 9 monté rotatif sur un pied 28 et divisé en quatre secteurs circulaires de 90° formant quatre postes de travail 11-14, et de moyens d'entraînement en rotation 48-50 du plateau circulaire 9 consistant, en l'exemple, en une couronne dentée 48 sur laquelle est montée le dit plateau circulaire, et en un pignon 49 engrenant avec la dite roue dentée et entraîné en rotation par un moteur 50 solidaire du pied 28,
- pour chaque modèle de tube cintré 1, quatre gabarits de formage 2a-2d identiques formant chacun un conduit de guidage ouvert présentant le profil longitudinal du dit tube cintré, et destinés à être fixés de façon amovible, chacun sur un des postes de travail 11-14, par l'intermédiaire de moyens de fixation et d'indexation de leur position,
- un premier système robotisé 28, 29 destiné au chargement des tubes 1,
- des moyens automatisés 38-42 d'alimentation du premier système robotisé 28, 29 en tronçons de tube plastique prédécoupés à une longueur prédéterminée,
- et un second système robotisé 43, 44 destiné au montage de composants sur les extrémités des tubes cintrés 1, et au déchargement de ces tubes cintrés.

En premier lieu, les gabarits de formage 2a-2d comportent, d'une part, une base composée de deux plaques planes identiques consistant en une plaque de base inférieure 4 et en une plaque de base intermédiaire 5, et d'autre part, des organes de guidage ponctuel 3a-3n adaptés pour délimiter le conduit de guidage.

En premier lieu, les organes de guidage 3a-3n comportent une gorge 6 de diamètre sensiblement supérieur au diamètre du tube 1, adaptée pour former un conduit matérialisé par une succession d'appuis ponctuels du dit tube. Ces organes de guidage 3a-3n sont déclinés en une gamme d'organes de guidage ponctuel dotés de gorges présentant des plans de symétrie dont l'inclinaison par rapport aux plans des plaques de base 4, 5 varie sur une plage de valeurs comprises entre 0° et 90°.

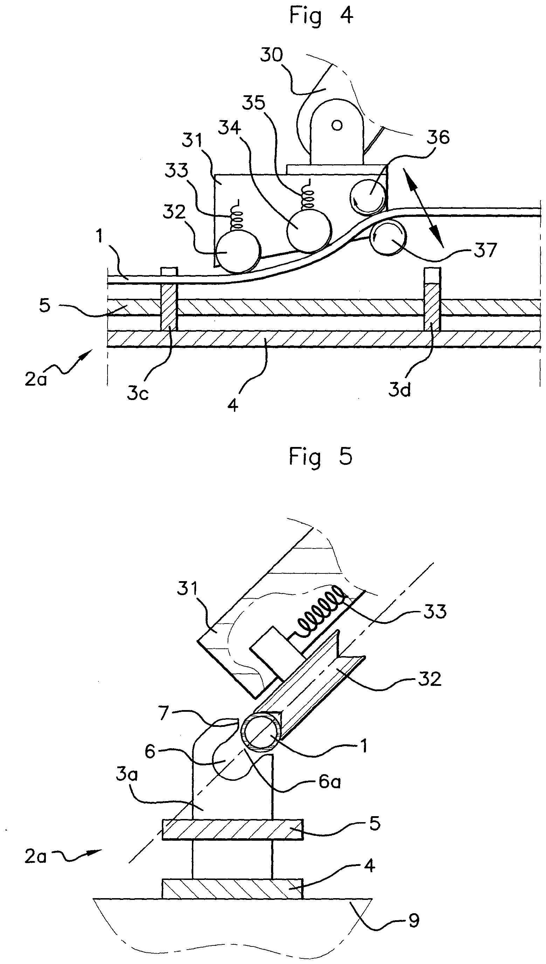

A titre d'exemple, la figure 5 représente ainsi un organe de guidage 3a doté d'une gorge 6 dont le plan de symétrie est incliné d'un angle de 45° par rapport au plan des plaques de base 4, 5.

De plus, chaque gorge 6 comporte une ouverture 6a d'introduction et de retrait du tube 1 présentant une largeur sensiblement inférieure au diamètre de la dite gorge, adaptée pour conférer un caractère rétentif à cette dernière. Cette ouverture 6a d'introduction et de retrait du tube1 est, en outre, dotée de bords longitudinaux chanfreinés 7.destinés notamment à faciliter l'insertion des tubes 1 dans les gorges 6.

Quelle que soit l'orientation de la gorge 6, chacun de ces organes 3a-3n comporte :
- une portion inférieure d'ancrage dans la plaque de base inférieure 4, présentant, en outre, des dimensions adaptées pour former une entretoise définissant la distance séparant les deux plaques de base 4, 5,
- et une portion supérieure de guidage dans laquelle est ménagée la gorge 6.

Chaque plaque de base 4, 5 présente, quant à elle, la forme générale d'un ruban de plaque rigide dont les faces planes sont axées sur un axe coïncidant avec l'axe longitudinal du conduit de guidage formé par les gorges 6 des organes de guidage 3a-3n.

Ces deux plaques de base 4, 5 sont, en outre, percées de lumières transversales :
- destinées à loger la portion d'ancrage des organes de guidage 3a-3n concernant la plaque de base inférieure 4,
- au travers desquelles s'étendent les portions supérieures des organes de guidage 3a-3n concernant la plaque de base intermédiaire 5.

Tel que précité, l'unité de formage 8 comporte, quant à elle, quatre postes de travail identiques 11-14 adaptés pour recevoir chacun un gabarit de formage 2a-2d.

Chacun de ces postes de travail 11-14 est, en outre, équipé de deux raccords 15, 16 intégrant un joint d'étanchéité 17 et adaptés pour être connectés de façon étanche chacun sur une des extrémités du tube 1 inséré dans le conduit de guidage 3a-3n du gabarit de formage 2a-2d.

Un de ces raccords 15, dit d'alimentation, est monté sur un conduit d'alimentation 18 raccordé à 'une vanne de distribution 19 adaptée, par exemple par l'intermédiaire d'un joint tournant, pour permettre d'alimenter ce conduit d'alimentation 18 :
- en vue de porter le tube 1 à une température entraînant une transition fragile-ductile, à une source centralisée 25 de production de vapeur d'eau,
- en vue de refroidir le tube 1, successivement à une source centralisée 26 de production d'eau froide, puis à une source centralisée 27 de production d'air de séchage du dit tube après refroidissement de ce dernier.

Le second raccord 16 est, quant à lui, monté sur un conduit 20 d'évacuation du fluide en aval du tube 1.

Chacun des raccords 15, 16 est, en outre, monté sur la tige d'un vérin 21, 22 dont le corps est solidarisé sur une potence 23, 24 dont la base est adaptée pour être solidarisée sur la plateau support 9 dans le prolongement d'une des extrémités du gabarit de formage 2a-2d, de façon à permettre de déplacer chaque raccord 15, 16 entre une position de connexion étanche avec le tube 1 inséré dans le dit gabarit de formage, et une position déconnectée et distante du dit tube.

Le premier système robotisé consiste en un robot six axes 28 associé à une unité programmable de pilotage 29, et comportant un bras 30 sur l'extrémité duquel est articulée une main 31 de préhension des tubes 1 et d'insertion de ces derniers dans le conduit de guidage 3a-3n du gabarit de formage 2a-2d fixé sur le poste de travail 11-14 positionné en regard du dit système robotisé.

La main de préhension et d'insertion 31 de ce robot 28 comporte, en premier lieu, un premier organe presseur 32 présentant une surface d'appui apte à exercer sur le tube 1 une force d'insertion de ce dernier dans le conduit de guidage 3a-3n du gabarit de formage 2a-2d. Cet organe presseur consiste, en l'exemple, en un galet 32 doté d'une gorge périphérique de section conjuguée de celle du tube 1, dont l'axe de rotation est sollicité par des moyens élastiques 33 adaptés pour autoriser un débattement du dit organe presseur selon une direction parallèle à l'axe de la force d'insertion exercée par ce dernier.

Cette main de préhension et d'insertion 31 comporte également deux rouleaux motorisés 36, 37 disposés et entrainés en rotation de façon que le tube 1 s'engage entre les dits rouleaux et soit entrainé vers l'organe presseur 32 selon une direction de défilement opposée à la direction de déplacement de la dite main de préhension et d'insertion.

De plus, ces rouleaux motorisés 36, 37 sont montées sur la main de préhension et d'insertion 31 par l'intermédiaire de moyens de déplacement relatif des dits rouleaux entre une position rapprochée d'entrainement du tube 1 et une position écartée d'échappement du dit tube.

La main de préhension et d'insertion 31 comporte, enfin, un second organe presseur 34 consistant également en un galet dont l'axe de rotation est sollicité par des moyens élastiques 35. Ce second organe presseur 34 est positionné :
- longitudinalement, entre le premier organe presseur 32 et les rouleaux motorisés 36, 37,
- de façon que sa surface d'appui sur le tube 1 s'étende dans un plan intermédiaire entre le plan de la surface d'appui du premier organe presseur 32, et le plan de jonction des deux rouleaux motorisés 36, 37.

Selon l'invention et tel que notamment représenté à la figure 5,, ce premier système robotisé 28, 29 est, en outre, programmé pour faire varier l'inclinaison de la main de préhension et d'insertion 31 articulée de façon que la force d'insertion du tube 1 dans la gorge 6 des organes de guidage 3a-3n s'exerce, de façon optimale, selon un axe parallèle au plan de symétrie de la dite gorge.

Par ailleurs, afin d'éviter un éventuel glissement longitudinal du tube à l'intérieur du conduit de guidage 3a-3n, un organe rétractable, tel qu'un vérin 60, est adapté pour bloquer l'extrémité du tube dans le dit conduit de guidage lors de l'insertion de ce tube dans un gabarit de formage 2a-2d.

Le premier système robotisé 28, 29 est, en outre, associé à des moyens automatisés d'alimentation en tube plastique adaptés pour alimenter la main de préhension et d'insertion 31 en tronçons de tube plastique prédécoupés à une longueur prédéterminée.

Selon l'exemple représenté, ces moyens d'alimentation en tube plastique comprennent :
- une bobine 38 de conditionnement du dit tube plastique,
- des moyens de dévidage de la bobine 38 consistant en des rouleaux motorisés tels que 39, 40 entre lesquels est entraîné et défile le tube 1,
- un capteur 41, tel qu'un codeur, de mesure de la longueur de tube dévidée,
- et des moyens de découpe 42 de tronçons de tube de longueurs présélectionnées.

Le second système robotisé est quant à lui disposé de façon à être positionné en regard d'un des postes de travail 11-14 voisin du poste de travail positionné en regard du premier système robotisé 28, 29.

Ce second système robotisé consiste en un robot six axes 43 associé à une unité programmable de pilotage 44, et comportant un bras 45 sur l'extrémité duquel est articulée une main 46 doté d'organes 47 de préhension du tube cintré 1 inséré dans le conduit de guidage 3a-3n en vue du déchargement de ce tube.

De plus, le robot 43 peut également comporter une seconde main (non représentée) équipée et programmée de façon à permettre le montage de composants sur les extrémités des tubes cintrés 1.

Après une étape initiale manuelle de fixation des gabarits de formage 2a-2d et des supports 23, 24 des raccords 15, 16 sur chacun des postes de travail 11-14, et d'indexation de la position des gabarits de formage 2a-2d, les cycles de formage comportent, pour chacun des postes de travail 11-14, les étapes suivantes, entre chacune desquelles le dit poste de travail est déplacé en rotation sur une course de 90° :
- insertion du tube à cintrer maintenu dans la main de préhension et d'insertion 31 du premier système robotisé 28, 29 dans le conduit de guidage 3a-3n du gabarit de formage équipant le dit poste de travail, puis connexion des raccords 15, 16 avec le tube 1 par déploiement des vérins 21, 22,
- mise en circulation de la vapeur d'eau destinée à l'obtention de la transition fragile-ductile,
- mise en circulation successivement de l'eau froide de refroidissement du tube, puis de l'air de séchage du tube,
- montage éventuel de composants sur les extrémités du tube cintré 1, puis déconnexion des raccords 15, 16 par rétraction des vérins 21, 22, et déchargement du tube au moyen de la main de préhension 46 du second système robotisé 43, 44.

Hormis l'étape initiale de positionnement des gabarits de formage 2a-2d et des supports 23, 24 sur les postes de travail 11-14, ce dispositif de cintrage permet de réaliser par formage thermique, avec une cadence élevée, des tubes cintrés 1 en matière plastique.

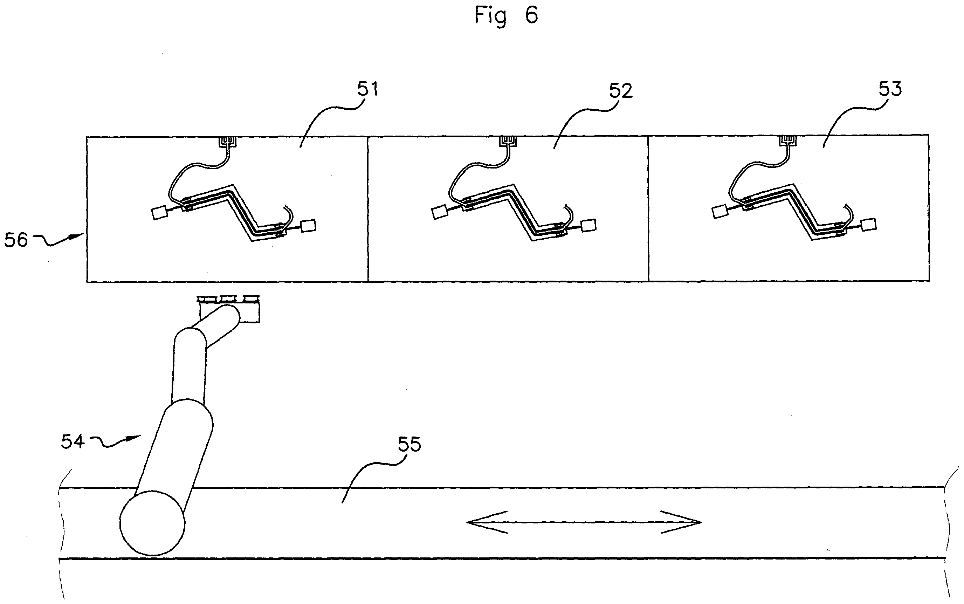

La figure 6 représente, de façon schématique, une variante de réalisation selon laquelle :
- l'unité de formage 56 comporte trois postes de travail fixes 51-53 alignés les uns à côté des autres, et comportant un équipement similaire à celui des postes de travail 11-14 ci-dessus décrits,
- le premier système robotisé 54 est adapté pour être déplacé selon une trajectoire rectiligne de façon à se positionner successivement en regard de chacun des postes de travail 51-53, de façon à assurer le chargement d'un tube 1 dans le conduit de guidage du gabarit de formage positionné sur le dit poste de travail, précédé éventuellement du déchargement du tube préalablement cintré.

## Revendications

1. Dispositif de cintrage pour la réalisation par formage thermique de tubes cintrés (1) en matière plastique, comportant des gabarits de formage (2a-2d) formant un conduit de guidage ouvert (3a-3n) présentant le profil longitudinal des tubes cintrés, le dit dispositif de cintrage comprenant:
- des moyens centralisés (25) d'alimentation en un fluide de chauffage des tubes, porté à une température adaptée pour obtenir, par circulation du dit fluide a l'intérieur des tubes, une transition fragile-ductile des dits tubes,
- des moyens centralisés (26, 27) d'alimentation en au moins un fluide de refroidissement des tubes par circulation de chaque fluide à l'intérieur des dits tubes, le dit dispositif de cintrage étant **caractérisé en ce qu'**il comprend:
- une unité de formage (8 ; 56) comportant au moins trois postes de travail (11-14; 51-53) destinés à être équipés de gabarits de formage identiques (2a-2d), chacun des dits postes de travail comprenant:
• un plateau support (9) doté de moyens de fixation et d'indexation de la position du gabarit de formage (2a-2d),
• des moyens de circulation de fluide (15-20) adaptés pour former un circuit de circulation de fluide intégrant le tube (1) positionné sur le gabarit de formage (2a-2d), et comportant:
▪ un organe de distribution (19) adapté pour être raccordé aux moyens centralisés (26, 27) d'alimentation en fluides et pour permettre de sélectionner le fluide d'alimentation du circuit de circulation,
▪ un conduit d'alimentation (18) raccordé à l'organe de distribution (19) et doté d'une extrémité libre équipée d'un raccord (15) de connexion étanche avec le tube (1),
▪ un conduit d'évacuation (20) doté d'une extrémité libre équipée d'un raccord (16) de connexion étanche avec le tube (1),
▪ et, pour, chacun des raccords (15, 16), un support (23, 24) adapté pour être fixé sur le plateau (9) dans le prolongement du gabarit de formage (2a-2d), sur lequel le dit raccord est monté par l'intermédiaire d'un organe (21, 22) de déplacement de ce raccord entre une position de connexion étanche avec le tube et une position déconnectée du dit tube,
- un système robotisé polyarticulé (28, 29; 54) :
• comportant une main (31) de préhension d'un tube à cintrer dotée d'un organe presseur (32) présentant une surface d'appui apte à exercer sur le tube une force d'insertion de ce dernier dans le conduit de guidage du gabarit de formage (2a-2d),
• associé à une unité programmable de pilotage (29) programmée pour commander un déplacement de la main (31) du dit système robotisé adapté pour que l'organe presseur (32) se déplace le long d'une trajectoire correspondant au profil longitudinal du conduit de guidage du gabarit de formage,
- des moyens de déplacement relatif (48-50; 55) du système robotisé (28, 29; 54) et de l'unité de formage (8; 56), adaptés pour que le dit système robotisé soit positionné successivement en regard de chacun des postes de travail (11-14; 51-53),
- et une unité centrale de gestion de l'unité de formage (8; 56) et du système robotisé (28, 29 ; 54) programmée pour commander, après une étape initiale manuelle de fixation des gabarits de formage (2a-2d) et des supports (23, 24) des raccords (15, 16) sur les postes de travail (11-14 ;51-53), et d'indexation de la position des gabarits de formage (2a-2d), des cycles de formage comportant, pour chaque poste de travail (11-14 ; 51-53), les étapes suivantes :
- insertion du tube à cintrer (1) maintenu dans la main (31) du système robotisé (28, 29 ; 54) dans le conduit de guidage (3a-3n) du gabarit de formage (2a-2d) équipant le dit poste de travail,
- connexion des raccords (15, 16) avec le tube (1) par déplacement des organes de déplacement (21, 22) des dits raccords, et déplacement relatif de l'unité de formage (8; 56) et du système robotisé (28, 29; 54) destiné à positionner le dit système robotisé en regard d'un autre poste de travail (11-14 ; 51-53),
- mise en circulation du fluide destiné à l'obtention de la transition fragile-ductile,
- mise en circulation de chaque fluide de refroidissement,
- et déconnexion des raccords (15, 16) en vue du déchargement du tube cintré.

2. Dispositif de cintrage selon la revendication 1 **caractérisé en ce que** les moyens centralisés (25) d'alimentation en un fluide de chauffage comprennent une source de production de vapeur d'eau.

3. Dispositif de cintrage selon l'une des revendications 1 ou 2 **caractérisé en ce que** les moyens centralisés (26, 27) d'alimentation en au mains un fluide de refroidissement comprennent une source de production d'eau froide, et une source de production d'air de séchage des tubes après refroidissement de ces derniers.

4. Dispositif de cintrage selon l'une des revendications 1 à 3 **caractérisé en ce qu'**il comprend des moyens automatisés (38-42) d'alimentation en tube plastique adaptés pour alimenter la main (31) du système robotisé (28, 29; 54) en tronçons de tube plastique prédécoupés à une longueur prédéterminée.

5. Dispositif de cintrage selon la revendication 4 **caractérisé en ce que** les moyens d'alimentation en tube plastique comprennent :
- une bobine (38) de conditionnement du dit tube plastique,
- des moyens de dévidage (39, 40) de la bobine (38),
- un capteur (41) de mesure de la longueur de tube dévidée,
- et des moyens de découpe (42) de tronçons de tube de longueurs présélectionnées.

6. Dispositif de cintrage selon l'une des revendications précédentes **caractérisé en ce que** l'organe de déplacements de chaque raccord (15, 16) consiste en un vérin (21, 22) doté d'une tige sur laquelle est solidarisé le dit raccord, et d'un corps fixé sur le support (23, 24).

7. Dispositif de cintrage selon l'une des revendications précédentes **caractérisé en ce que** chaque gabarit de formage (2a-2d) est doté de moyens de guidage (3a-3n) constitués d'organes de guidage ponctuel comportant une gorge (6) de section conjuguée de celle du tube, formant un conduit de guidage matérialisé par une succession d'appuis ponctuels du dit tube.

8. Dispositif de cintrage selon la revendication 7 **caractérisé en ce que** chaque organe de guidage (3a-3n) comporte une gorge (6) de forme rétentive présentant une ouverture d'introduction et de retrait du tube dotée de bords longitudinaux chanfreinés (7).

9. Dispositif de cintrage selon l'une des revendications 7 ou 8 **caractérisé en ce que** le système robotisé (28, 29 ; 54) présente une main (31) articulée de façon à pouvoir être programmé pour que la force d'insertion du tube dans la gorge (6) de chaque organe de guidage (3a-3n) s'exerce selon un axe parallèle au plan de symétrie de la dite gorge.

10. Dispositif de cintrage selon l'une des revendications précédentes **caractérisé en ce que** chaque organe presseur (32) consiste en un galet doté d'une gorge périphérique de section conjuguée de celle du tube.

11. Dispositif de cintrage selon la revendication 10 **caractérisé en ce que** chaque organe presseur (32) est associé à des moyens élastiques (33) adaptés pour autoriser un débattement du dit organe presseur selon une direction parallèle à l'axe de la force d'insertion exercée par ce dernier.

12. Dispositif de cintrage selon l'une des revendications précédentes **caractérisé en ce qu'**il comprend un organe rétractable (60) de blocage de l'extrémité du tube dans le conduit de guidage (3a-3n) du gabarit de formage(2a-2d), destiné à être actionné lors de l'insertion d'un tube dans un gabarit de formage.

13. Dispositif de cintrage selon l'une des revendications précédentes **caractérisé en ce que** la main de préhension (31) du système robotisé (28, 29; 54) comporte des rouleaux motorisés (36, 37) disposés et entrainés en rotation de façon que le tube s'engage entre les dits rouleaux et soit entrainé vers l'organe presseur (32) selon une direction de défilement opposée à la direction de déplacement de la dite main de préhension.

14. Dispositif de cintrage selon l'une des revendications précédentes **caractérisé en ce que** l'unité de formage (56) comporte des postes de travail fixes (51-53), les moyens de déplacement relatif (55) du système robotisé (54) et de la dite unité de formage étant adaptés pour déplacer le système robotisé de façon a l'amener successivement en regard de chacun des dits postes de travail fixes.

15. Dispositif de cintrage selon l'une des revendications 1 à 13 **caractérisé en ce que** l'unité de formage (8) comporte des moyens de déplacement des postes de travail (11-14) adaptés pour amener successivement ces derniers en regard d'une position fixe sur laquelle est situé le système robotisé (28, 29).

## Patentansprüche

1. Biegevorrichtung für die Herstellung von gebogenen Rohren (1) aus Kunststoff durch Thermoformen, umfassend Formschablonen (2a-2d), die eine offene Führungsleitung (3a-3n) bilden, die das Längsprofil der gebogenen Rohre aufweist, wobei die Biegevorrichtung umfasst:
- zentralisierte Mittel (25) zur Versorgung der Rohre mit einem Heizfluid, das auf eine geeignete Temperatur gebracht wird, um durch Zirkulation des Fluids im Inneren der Rohre einen Spröde/Duktil-Übergang der Rohre zu erreichen,
- zentralisierte Mittel (26, 27) zur Versorgung der Rohre mit mindestens einem Kühlfluid durch Zirkulation jedes Fluids im Inneren der Rohre,
wobei die Biegevorrichtung **dadurch gekennzeichnet ist, dass** sie folgendes umfasst:
- eine Formungseinheit (8; 56), aufweisend mindestens drei Arbeitsstationen (11-14; 51-53), die dazu eingerichtet sind, mit identischen Formschablonen (2a-2d) ausgestattet zu sein, wobei jede der Arbeitsstationen umfasst:
• eine Stützplatte (9), die mit Mitteln zur Befestigung und Indexierung der Position der Formschablone (2a-2d) versehen ist,
• Fluidzirkulationsmittel (15-20), die dazu eingerichtet sind, einen Fluidzirkulationskreis, der das auf der Formschablone (2a-2d) angeordnete Rohr (1) einschließt, zu bilden, wobei die Fluidzirkulationsmittel folgendes umfassen:
• ein Verteilungselement (19), das dazu eingerichtet ist, an die zentralisierten Mittel (26, 27) zur Fluidversorgung angeschlossen zu sein und eine Auswahl des Versorgungsfluids des Zirkulationskreises zu ermöglichen,
• eine Versorgungsleitung (18), die an das Verteilungselement (19) angeschlossen ist und ein freies Ende aufweist, das mit einem Anschluss (15) zur dichten Verbindung mit dem Rohr (1) ausgestattet ist,
• eine Ablaufleitung (20), die mit einem freien Ende versehen ist, das mit einem Anschluss (16) zur dichten Verbindung mit dem Rohr (1) ausgestattet ist,
• und für jeden der Anschlüsse (15, 16) eine Stütze (23, 24), die geeignet ist, auf der Platte (9) in der Verlängerung der Formschablone (2a-2d) befestigt zu sein, auf der der Anschluss über ein Element (21, 22) zum Verschieben dieses Anschlusses zwischen einer dichten Verbindungsposition mit dem Rohr und einer von dem Rohr getrennten Position montiert ist,
- ein mehrgelenkiges Robotersystem (28, 29; 54):
• umfassend eine Hand (31) zum Ergreifen eines zu biegenden Rohrs, wobei die Hand mit einem Druckelement (32) versehen ist, das eine Stützfläche aufweist, die geeignet ist, eine Kraft auf das Rohr auszuüben um das Rohr in eine Führungsleitung der Formschablone (2a-2d) einzusetzen,
• und verbunden mit einer programmierbaren Steuereinheit (29), die programmiert ist, um ein entsprechendes Verschieben der Hand (31) des Robotersystems zu steuern, so dass sich das Druckelement (32) entlang einer Bahn entsprechend dem Längsprofil der Führungsleitung der Formschablone verschiebt,
- Mittel zum relativen Verschieben (48-50; 55) des Robotersystems (28, 29; 54) und der Formungseinheit (8; 56), die dazu ausgebildet sind, das Robotersystem nacheinander gegenüber jeder der Arbeitsstationen (11-14; 51-53) zu positionieren,
- und eine zentrale Steuereinheit der Formungseinheit (8; 56) und des Robotersystems (28, 29; 54), die programmiert ist, um nach einem anfänglichen manuellen Schritt der Befestigung der Formschablonen (2a-2d) und der Stützen (23, 24) der Anschlüsse (15, 16) an den Arbeitsstationen (11-14; 51-53) und der Indexierung der Position der Formschablonen (2a-2d) Formungszyklen zu steuern, umfassend für jede Arbeitsstation (11-14; 51-53) die folgenden Schritte:
- Einsetzen des zu biegenden Rohrs (1), das in der Hand (31) des Robotersystems (28, 29; 54) gehalten wird, in die Führungsleitung (3a-3n) der Formschablone (2a-2d), mit der die Arbeitsstation ausgestattet ist,
- Verbinden der Anschlüsse (15, 16) mit dem Rohr (1) durch Verschieben der Elemente (21, 22) zum Verschieben der Anschlüsse und relatives Verschieben der Formungseinheit (8; 56) und des Robotersystems (28, 29; 54), das dazu bestimmt ist, das Robotersystem gegenüber einer anderen Arbeitsstation (11-14; 51-53) zu positionieren,
- Inumlaufbringen des Fluids, das für den Erhalt des Spröde/Duktil-Übergangs bestimmt ist,
- Inumlaufbringen jedes Kühlfluids,
- und Trennen der Anschlüsse (15, 16) zum Abladen des gebogenen Rohrs.

2. Biegevorrichtung nach Anspruch 1, **dadurch gekennzeichnet, dass** die zentralisierten Mittel (25) zur Versorgung mit einem Heizfluid eine Quelle zur Erzeugung von Wasserdampf umfassen.

3. Biegevorrichtung nach einem der Ansprüche 1 oder 2, **dadurch gekennzeichnet, dass** die zentralisierten Mittel (26, 27) zur Versorgung mit mindestens einem Kühlfluid eine Quelle zur Kaltwasserzeugung und eine Quelle zur Erzeugung Trockenluft für die Rohre nach deren Kühlung umfassen.

4. Biegevorrichtung nach einem der Ansprüche 1 bis 3, **dadurch gekennzeichnet, dass** sie automatisierte Mittel (38-42) zur Zufuhr von Kunststoffrohren umfasst, die geeignet sind, die Hand (31) des Robotersystems (28, 29; 54) mit Kunststoffrohrstücken zu versorgen, die auf eine vorbestimmte Länge vorgeschnitten sind.

5. Biegevorrichtung nach Anspruch 4, **dadurch gekennzeichnet, dass** die Mittel zur Zufuhr von Kunststoffrohren folgendes umfassen:
- eine Rolle (38) mit aufgewickeltem Kunststoffrohr,
- Mittel (39, 40) zum Abwickeln der Rolle (38),
- einen Sensor (41) zum Messen der Länge des abgewickelten Rohrs,
- und Mittel zum Abschneiden (42) von Rohrstücken mit vorgewählten Längen.

6. Biegevorrichtung nach einem der vorhergehenden Ansprüche, **dadurch gekennzeichnet, dass** das Verschiebeelement jedes Anschlusses (15, 16) aus einem Zylinder (21, 22) besteht, der mit einer Stange, mit der der Anschluss verbunden ist, und einem auf der Stütze (23, 24) befestigten Körper versehen ist.

7. Biegevorrichtung nach einem der vorhergehenden Ansprüche, **dadurch gekennzeichnet, dass** jede Formschablone (2a-2d) mit Führungsmitteln (3a-3n) versehen ist, die von punktuellen Führungselementen gebildet ist, umfassend eine Nut (6) mit einem Querschnitt, der an denjenigen des Rohrs angepasst ist, wobei die Führungsmittel eine Führungsleitung bilden, die durch eine Aufeinanderfolge von punktuellen Abstützungen des Rohrs verwirklicht ist.

8. Biegevorrichtung nach Anspruch 7, **dadurch gekennzeichnet, dass** jedes Führungselement (3a-3n) eine Nut (6) von retentiver Form umfasst, die eine Einführ- und Entnahmeöffnung des Rohrs aufweist, die mit abgeschrägten Längsrändern (7) versehen ist.

9. Biegevorrichtung nach einem der Ansprüche 7 oder 8, **dadurch gekennzeichnet, dass** das Robotersystem (28, 29; 54) eine gelenkige Hand (31) aufweist, die derart programmiert werden kann, dass die Einsetzkraft des Rohrs in die Nut (6) jedes Führungselements (3a-3) entlang einer Achse parallel zur Symmetrieebene der Nut ausgeübt wird.

10. Biegevorrichtung nach einem der vorhergehenden Ansprüche, **dadurch gekennzeichnet, dass** jedes Druckelement (32) aus einer Rolle besteht, die mit einer Umfangsnut mit einem an den Querschnitt des Rohrs angepassten Querschnitt versehen ist.

11. Biegevorrichtung nach Anspruch 10, **dadurch gekennzeichnet, dass** jedes Druckelement (32) elastischen Mitteln (33) zugeordnet ist, die angepasst sind, um ein Ausschlagen des Druckelements in eine Richtung parallel zur Achse der von den Druckelementen ausgeübten Einsetzkraft zu gestatten.

12. Biegevorrichtung nach einem der vorhergehenden Ansprüche, **dadurch gekennzeichnet, dass** sie ein einziehbares Element (60) zum Feststellen des Endes des Rohrs in der Führungsleitung (3a-3n) der Formschablone (2a-2d) umfasst, das dazu eingerichtet ist, beim Einsetzen eines Rohrs in die Formschablone betätigt zu werden.

13. Biegevorrichtung nach einem der vorhergehenden Ansprüche, **dadurch gekennzeichnet, dass** die Greifhand (31) des Robotersystems (28, 29; 54) motorisierte Walzen (36, 37) umfasst, die in Drehung angeordnet und angetrieben werden, so dass das Rohr zwischen den Walzen eingreift und zu dem Druckelement (32) in eine Vorschubrichtung entgegengesetzt zur Verschieberichtung der Greifhand angetrieben wird.

14. Biegevorrichtung nach einem der vorhergehenden Ansprüche, **dadurch gekennzeichnet, dass** die Formungseinheit (56) feste Arbeitsstationen (51-53) umfasst, wobei die Mittel (55) zum relativen Verschieben des Robotersystems (54) und der Formungseinheit dazu ausgebildet sind, das Robotersystem derart zu verschieben, dass es nach und nach gegenüber jede der festen Arbeitsstationen gebracht wird.

15. Biegevorrichtung nach einem der Ansprüche 1 bis 13, **dadurch gekennzeichnet, dass** die Formungseinheit (8) Mittel zum Verschieben der Arbeitsstationen (11-14) umfasst, um nach und nach die die Arbeitsstationen gegenüber eine feste Position, an der sich das Robotersystem (28, 29) befindet, zu bringen.

## Claims

1. A bending device for producing bent tubes (1) of plastic material by thermoforming, comprising forming templates (2a-2d) forming an open guide duct (3a-3n) having the longitudinal profile of the bent tubes, said bending device including
- centralized means (25) for supplying a heating fluid for the tubes, wherein the heating fluid is brought to a suitable temperature for obtaining, by circulation of said fluid inside the tubes, a brittle-ductile transition of said tubes,
- centralized means (26, 27) for supplying of at least one cooling fluid for the tubes by circulation of each fluid inside said tubes,
said bending device being **characterized in that** it includes:
- a forming unit (8; 56) comprising at least three workstations (11-14; 51-53) intended to be equipped with identical forming templates (2a-2d), each of said workstations including:
• a support plate (9) provided with means for fixing and indexing the position of the forming template (2a-2d),
• fluid circulation means (15-20) suitable for forming a fluid circulation circuit integrating the tube (1) positioned on the forming template (2a-2d), and comprising:
• a distribution element (19) suitable for being connected to the centralized means (26, 27) for supplying fluids and for permitting the selection of the supply fluid of the circulation circuit,
• a supply duct (18) connected to the distribution element (19) and provided with a free end equipped with a connector (15) for sealed connection with the tube (1),
• an evacuation duct (20) provided with a free end equipped with a connector (16) for sealed connection with the tube (1),
• and, for each of the connectors (15, 16) a support (23, 24) suitable to be fixed on the plate (9) in the extent of the forming template (2a-2d), on which said connector is mounted by means of an element (21, 22) for moving this connector between a position of sealed connection with the tube and a position disconnected from said tube,
- a multi-articulated robotized system (28, 29; 54):
• comprising a hand (31) for gripping a tube which is to be bent, provided with a pressing element (32) having a bearing surface able to exert on the tube an insertion force for inserting the latter into the guide duct of the forming template (2a-2d),
• associated with a programmable control unit (29) programmed to control a movement of the hand (31) of said robotized system suitable so that the pressing element (32) moves along a path corresponding to the longitudinal profile of the guide duct of the forming template,
- means for relative displacement (48-50; 55) of the robotized system (28, 29; 54) and of the forming unit (8; 56), suitable so that the said robotized system is positioned successively opposite each of the workstations (11-14; 51-53),
- and a central management unit of the forming unit (8; 56) and of the robotized system (28, 29; 54) programmed to control, after an initial step of manual fixing of the forming templates (2a-2d) and of the supports (23, 24) of the connectors (15, 16) on the workstations (11-14; 51-53), and of indexing of the position of the forming templates (2a-2d), forming cycles comprising, for each workstation (11-14; 51-53), the following steps:
- insertion of the tube (1) which is to be bent, held in the hand (31) of the robotized system (28, 29; 54) in the guide duct (3a-3n) of the forming template (2a-2d) equipping said workstation,
- connection of the connectors (15, 16) with the tube (1) by movement of the movement elements (21, 22) of said connectors, and relative movement of the forming unit (8; 56) and of the robotized system (28, 29; 54) intended to position said robotized system opposite another workstation (11-14; 51-53),
- circulating of the fluid intended for the obtaining of the brittle-ductile transition,
- circulating of each cooling fluid,
- and disconnection of the connectors (15, 16) for discharging of the bent tube.

2. Bending device according to claim 1, **characterized in that** the centralized means (25) for supplying a heating fluid include a source for the production of water vapour.

3. Bending device according to claim 1 or 2, **characterized in that** the centralized means (26, 27) for supplying at least one cooling fluid include a source for the production of cold water, and a source for the production of air for drying the tubes after cooling of these latter.

4. Bending device according to one of claims 1 to 3, **characterized in that** it includes automated means (38-42) for the supply of plastic tube, suitable for supplying the hand (31) of the robotized system (28, 29; 54) with sections of plastic tube pre-cut to a predetermined length.

5. Bending device according to claim 4, **characterized in that** the means for the supply of plastic tube include:
- a packaging coil (38) of said plastic tube,
- means (39, 40) for unwinding of the coil (38),
- a sensor (41) for measuring the length of the unwound tube,
- and means (42) for cutting sections of tube of preselected lengths.

6. Bending device according to one of the preceding claims, **characterized in that** the element for movements of each connector (15, 16) consists of a jack (21, 22) provided with a rod on which said connector is secured, and with a body fixed on the support (23, 24).

7. Bending device according to one of the preceding claims, **characterized in that** each forming template (2a-2d) is provided with guiding means (3a-3n) constituted by members for intermittent guiding, comprising a groove (6) having a cross-section conjugate with that of the tube, forming a guide duct realized by a succession of intermittent supports of the said tube.

8. Bending device according to claim 7, **characterized in that** each guide element (3a-3n) comprises a shape-retentive groove (6) having an opening for the introduction and withdrawal of the tube, said opening being provided with longitudinal chamfered edges (7).

9. Bending device according to one of claims 7 or 8, **characterized in that** the robotized system (28, 29; 54) has a hand (31) articulated so as to be able to be programmed so that the force of insertion of the tube in the groove (6) of each guide element (3a-3n) is exerted along an axis parallel to the plane of symmetry of said groove.

10. Bending device according to one of the preceding claims, **characterized in that** each pressing element (32) consists of a runner provided with a peripheral groove having a cross-section conjugate with that of the tube.

11. Bending device according to claim 10, **characterized in that** each pressing element (32) is associated with elastic means (33) suitable for permitting a displacement of said pressing element along a direction parallel to the axis of the insertion force exerted by the latter.

12. Bending device according to one of the preceding claims, **characterized in that** it includes a retractable element (60) for locking the end of the tube in the guide duct (3a-3n) of the forming template (2a-2d), intended to be actuated upon the insertion of a tube into a forming template.

13. Bending device according to one of the preceding claims, **characterized in that** the gripping hand (31) of the robotized system (28, 29; 54) comprises motorized rollers (36, 27) disposed and driven in rotation such that the tube engages between the said rollers and is entrained towards the pressing element (32) along a running direction opposed to the direction of displacement of said gripping hand.

14. Bending device according to one of the preceding claims, **characterized in that** the forming unit (56) comprises fixed workstations (51-53), the means for relative displacement (55) of the robotized system (54) and of said forming unit being suitable for displacing the robotized system so as to bring it successively opposite each of the said fixed workstations.

15. Bending device according to one of Claims 1 to 13, **characterized in that** the forming unit (8) comprises means for displacement of the workstations (11-14) suitable for bringing these latter successively opposite a fixed position at which the robotized system (28, 29) is situated.
